# EUROPÄISCHE PATENTANMELDUNG

(11) **EP 2 027 959 A1**
(43) Veröffentlichungstag der Anmeldung: **25.02.2009**
(21) Anmeldenummer: 08014039.5
(22) Anmeldetag: 06.08.2008
(51) Int. Cl.: B23D 33/10

(54) **Vorrichtung zum Ablänger von Fensterbeschlagteilen**

(30) Priorität: 24.08.2007 DE 102007040281
(71) Anmelder: ROTOX GmbH B. EISENBACH, 65611 Brechen (DE)
(72) Erfinder: Eisenbach, Bernhard, Dipl.-Ing., 65611 Brechen (DE); Barthel, Thomas, 65549 Limburg (DE)
(74) Vertreter: Weilnau, Carsten

(57) **Zusammenfassung**

Die Erfindung betrifft eine Vorrichtung zum Ablängen eines für eine Tür- oder einen Fensterflügel (12) vorgesehenen Beschlagteils mit einer Ablängeinrichtung (14) und einem ihr zugeordneten Ablänganschlag (16). In einer Aufspannebene (18) für den Tür- oder Fensterflügel (12) sind zumindest ein Endanschlag (20) und Seitenanschläge (22, 24) vorgesehen. Entsprechend dem einstellbaren Abstand zwischen End- und Seitenanschlag wird über mechanische Kopplungsmittel der Abstand zwischen dem Ablänganschlag (16) und der Ablängeinrichtung (14) in einer Ebene im Wesentlichen parallel zur Aufspannebene (18) eingestellt (Figur 1).

## Beschreibung

Die vorliegende Erfindung betrifft eine Vorrichtung zum Ablängen eines für eine Tür- oder einen Fensterflügel vorgesehenen Beschlagteils mit einer Ablängeinrichtung und einem der Ablängeinrichtung zugeordneten Anschlag zum Ablängen des üblicherweise stabförmigen Beschlagteils auf eine von der Geometrie des Tür- oder Fensterflügels vorgegebene Länge.

### Stand der Technik

Im Stand der Technik sind Vorrichtungen zum Ablängen stabförmiger Beschlagteile als solche bekannt. Die DE 10 2005 044 938 A1 beschreibt beispielsweise eine Ablängvorrichtung, bestehend aus einer Schere oder Stanze, welche einen relativ zu der Schere oder Stanze verfahrbaren Anschlag aufweist, wobei die Bewegung des Anschlags relativ zu der Schere oder der Stanze über einen Antrieb erfolgt, der wahlweise in Abhängigkeit eines Datenspeichers oder einer manuellen Eingabe verfahrbar ist.

Eine derartige mit einem Datenspeicher, einem Mikroprozessor und einer Rechnereinheit bestückte Vorrichtung ist recht teuer in der Anschaffung, erfordert ein umfangreiches und intensives Anlernen des Bedienpersonals und kann bei einem auftretenden Störfall nur von besonders geschultem Fachpersonal gewartet und repariert werden.

Weiterhin ist im Stand der Technik eine Ablängvorrichtung für Beschlagteile von Fenster- oder Türflügeln bekannt, bei welcher zumindest ein Seitenanschlag in eine hochgeklappte Anschlagsposition zu überführen ist, sodass ein Fenster- oder Türflügel hiernach mit diesem in einen Anlagestellung treten kann. Nach diesem Anlegen des Fenster- oder Türflügels an den Anschlag fährt ein dem Seitenanschlag gegenüberliegender Endanschlag in eine Anlagestellung mit dem Fenster- oder Türflügel. Dessen Verstellbewegung wird mittels eines Zahnriemens und einer Umlenkeinrichtung auf einen senkrecht zur Aufspannebene verfahrbaren, einer Ablängeinrichtung zugeordneten Ablänganschlag übertragen. Das der Geometrie des Fenster- oder Türflügels entsprechend abzulängende Beschlagteil ist dann vertikal von oben durch die Stanze hindurch gegen den Ablänganschlag zu führen.

Bei dieser Vorrichtung ist eine aufwendige und daher störanfällige Kopplung zwischen dem mit dem Fensterflügel in Anschlag zu bringenden Endanschlag und dem der Ablängeinrichtung zugeordneten Anschlag erforderlich. Je weiter der in der Aufspannebene zu verfahrende Endanschlag verstellt wird, desto weiter muss der der Ablängeinrichtung zugeordnete Ablänganschlag nach unten von der Ablängeinrichtung weg bewegt werden.

Diese geometrischen Vorgaben erfordern eine relativ aufwendige Kopplung zwischen dem in Horizontalrichtung verfahrbaren Anschlag für den Fenster- oder Türflügel und dem in Vertikalrichtung gegenüber der Ablängeinrichtung verfahrbaren Ablänganschlag.

### Aufgabe

Der Erfindung liegt demgegenüber die Aufgabe zugrunde, eine verbesserte, vereinfachte, leicht handzuhabende und intuitiv zu bedienende Ablängeinrichtung für stabförmige Beschlagteile eines Fenster- oder Türflügels zur Verfügung zu stellen. Diese soll in der Herstellung sowie Wartung und Reparatur kostengünstig und universell für diverse Beschlagtypen verwendbar sein.

### Erfindung und vorteilhafte Wirkungen

Die der Erfindung zugrunde liegende Aufgabe wird mittels einer Vorrichtung gemäß Anspruch 1 gelöst. Weitere vorteilhafte Ausführungsformen der Erfindung sind in den Unteransprüchen angegeben.

Die erfindungsgemäße Vorrichtung ist zum Ablängen von Beschlagteilen ausgebildet, die für Tür- oder Fensterflügel vorgesehen sind. Die Vorrichtung weist hierfür eine Ablängeinrichtung, wie etwa eine Schere oder eine Stanze, und einen ihr zugeordneten Ablänganschlag auf, gegen welchen das abzulängende Beschlagteil in Anschlagsposition oder in einen Anlagestellung gebracht und bei Aktivierung der Ablängeinrichtung um den zwischen der Ablängeinrichtung und dem Ablänganschlag eingestellten Abstand gekürzt wird.

Die Ablängvorrichtung weist weiterhin eine Aufspannebene für den zum Beschlagteil zugehörigen Tür- oder Fensterflügel auf. In dieser Aufspannebene ist zumindest ein Endanschlag sowie zumindest ein Seitenanschlag vorgesehen, deren Abstand zueinander verstellbar ist. Zwischen dem End- und dem Seitenanschlag ist der Tür- oder Fensterflügel mit gegenüberliegenden Randabschnitten, vornehmlich mit seiner Ober- und Unterseite in eine Anlagestellung bringbar, sodass der Abstand zwischen dem End- und dem Seitenanschlag bei eingespanntem oder in Anlagestellung befindlichem Tür- oder Fensterflügel im Wesentlichen der Höhe des Tür- oder Fensterflügels entspricht.

Erfindungsgemäß sind mechanische Kopplungsmittel vorgesehen, die den Abstand zwischen dem Ablänganschlag und der Ablängeinrichtung in einer Ebene im Wesentlichen parallel zur Aufspannebene mit dem zwischen End- und Seitenanschlag einstellbaren Abstand koppeln. Demgemäß sieht die Erfindung vor, den Verstellweg eines in der Aufspannebene angeordneten End- oder Seitenanschlags in eine parallel zur Aufspannebene verlaufende Ebene zu übertragen. Insbesondere sieht die Erfindung vor, die Verstellbewegung des End-oder Seitenanschlags auf die in der parallelen Ebene vorgesehene Ablängeinrichtung und/oder auf den ihr zugeordneten Ablänganschlag zu übertragen.

Der Abstand, welcher sich ergibt, wenn der End- und der gegenüberliegende Seitenanschlag an den Randabschnitten des Tür- oder Fensterflügels anliegen, wird erfindungsgemäß mit möglichst einfachen Mitteln parallel zur Aufspannebene übertragen, sodass der Abstand zwischen Ablängeinrichtung und dem Ablänganschlag auf den Abstand zwischen dem End- und dem Seitenanschlag angepasst ist. Die zu übertragende Verstellbewegung unterliegt hierbei keiner Richtungsumkehr oder anderweitigen Umlenkung sondern sie wird unmittelbar und direkt auf die Ablängeinrichtung, bzw. auf den ihr zugeordneten Anschlag übertragen.

Sowie der Tür- oder Fensterflügel in der Aufspannebene mit beiden, dem Endanschlag und dem zumindest einen Seitenanschlag in Anlagestellung gebracht ist, weisen die Ablängeinrichtung und der ihr zugeordnete Ablänganschlag den geforderten Abstand zueinander auf, um ein für den in der Aufspannebene gehaltenen Tür- oder Fensterflügel vorgesehenes Beschlagteil individuell an die Geometrie des Tür- oder Fensterflügels angepasst abzulängen.

Auf etwaige elektronische Positionserfassungsmittel, elektrische Steuereinheiten sowie ein rechnergestütztes Einstellen des Abstands zwischen Ablänganschlag und Ablängvorrichtung kann in Kosten einsparender Weise verzichtet werden. Auch wird durch die unmittelbare mechanische Kopplung zwischen den in der Aufspannebene vorgesehenen und dort zumindest teilweise beweglich ausgebildeten Anschlägen und dem Ablänganschlag und/oder der Ablängeinrichtung eine intuitiv zu bedienende, wartungsarme und besonders zuverlässig funktionierende Vorrichtung zur Verfügung gestellt, die sogar ohne jegliche Bewegungsrichtung umlenkende Mittel auskommt.

Nach einer ersten vorteilhaften Ausgestaltung der Erfindung ist vorgesehen, dass der Ablänganschlag mit dem zumindest einen Seitenanschlag gekoppelt ist und parallel zu dem Seitenanschlag verstellbar ausgebildet ist. Hierunter ist insbesondere eine starre mechanische Kopplung zwischen dem Ablänganschlag und dem zumindest einen Seitenanschlag vorgesehen.

Beim Einspannen des Tür- oder Fensterflügels zwischen dem stationär oder beweglich ausgebildeten Endanschlag und dem verstellbaren Seitenanschlag wird der Ablänganschlag bei der Verstellbewegung des Seitenanschlags mit bewegt, sodass der Ablänganschlag den geforderten Abstand zur Ablängeinrichtung einnimmt, sobald der Seitenanschlag mit dem Tür- oder Fensterflügel in eine Kontaktstellung gelangt, vorausgesetzt dass dieser bereits am Endanschlag anliegt.

Nach einer Weiterbildung der Erfindung ist vorgesehen, dass eine Vielzahl von Seitenanschlägen in einem vorgegebenen bzw. gerasterten Abstand zueinander angeordnet und gemeinsam in der Aufspannebene verstellbar ausgebildet sind. Hierbei sind die Seitenanschläge vorzugsweise auch unmittelbar miteinander mechanisch gekoppelt. Der vorgegebene Abstand der Seitenanschläge ist durch die zur Verfügung stehenden Normmaße von Beschlagteilrohlingen bestimmt.

Beschlagteile für unterschiedlich hohe Tür- oder Fensterflügel sind derzeit in unterschiedlichen in 200 mm-Schritten abgestuften Längen erhältlich. Demgemäß sind auch die einzelnen an der Ablängeinrichtung vorgesehenen Seitenanschläge vorzugsweise in einem äquidistanten Raster von etwa 200 mm zueinander an der Ablängvorrichtung angeordnet. Ein jeder Seitenanschlag ist somit jeweils einem vorkonfektionierten Beschlagteil zugeordnet.

Von Vorteil ist hierbei, dass der oder die Seitenanschläge von der Aufspannebene leicht hervorstehen, sodass nach dem Anlegen des Tür- oder Fensterflügels an den Endanschlag die Seitenanschläge sofort und unmittelbar bis zum Anschlagen an den Tür- oder Fensterflügel verstellt bzw. verfahren werden können. Ein Hochklappen der Seitenanschläge, wie im Stand der Technik üblich, ist hierbei nicht mehr erforderlich.

Die Erfindung macht sich dabei die Erkenntnis zunutze, dass der Tür- oder Fensterflügelrahmen eine geringere Breite als der Abstand zwischen zueinander benachbart angeordneten Seitenanschlägen aufweist. Trotz einer Vielzahl von aus der Aufspannebene hervorragenden Seitenanschlägen kann somit ein sicheres Ablegen des Tür- oder Fensterflügels in der Aufspannebene zur Verfügung gestellt werden. Der Tür- oder Fensterflügelrahmen kommt hierbei stets zwischen zwei Seitenanschlägen zu liegen. Bei der anschließenden Zustellbewegung wird dann jeweils der erste außerhalb des Tür- oder Fensterflügelrahmens zu liegen kommende Seitenanschlag mit dem Randabschnitt des Flügels in Anlagestellung gebracht.

Nach einer Weiterbildung der Erfindung ist vorgesehen, dass der Ablänganschlag oder der zumindest eine Seitenanschlag starr miteinander mittels einer unterhalb der Aufspannebene angeordneten und im Wesentlichen parallel zur Aufspannebene verfahrbaren Schiene verbunden sind. Hierbei kann insbesondere vorgesehen sein, dass der Ablänganschlag nicht nur mit einem, sondern mit sämtlichen Seitenanschlägen starr verbunden ist, mithin sämtliche Seitenanschläge über die gegenüber dem Endanschlag verfahrbare Schiene starr miteinander gekoppelt bzw. miteinander verbunden sind.

Nach einer weiteren Ausführungsform der Erfindung ist vorgesehen, dass die Ablängeinrichtung mit zumindest einem der Seitenanschläge mechanisch gekoppelt und parallel zur Aufspannebene verstellbar ist. Hierbei beschränkt sich die Verstellbarkeit des Ablänganschlags und/oder der Ablängeinrichtung im Wesentlichen auf eine eindimensionale Bewegung, die durch die Ausrichtung der die Seitenanschläge miteinander verbindenden Schiene vorgegeben ist. Weiterhin liegen auch weitere Verstellmöglichkeiten des Ablänganschlags und der Ablängvorrichtung, beispielsweise parallel zur Aufspannebene, aber senkrecht oder schräg zur Verstellrichtung der Seitenanschläge im Rahmen der vorliegenden Erfindung.

Nach einer Weiterbildung der Erfindung ist Position der Ablängeinrichtung über ein Getriebemittel mit zumindest einem der Seitenanschläge gekoppelt. Das Getriebemittel, welches vorzugsweise als Untersetzungsgetriebe ausgebildet ist, ermöglicht eine Kompensationsbewegung oder Kompensationsverstellung der Ablängeinrichtung gegenüber dem Verstellweg des Ablänganschlags. Dies ist insbesondere von Vorteil, wenn das abzulängende Beschlagteil an beiden seiner freien Endabschnitten um jeweils ein einheitliches Maß gekürzt werden soll. Ein derartiges beidseitiges Ablängen von Beschlagteilen ist insbesondere bei solchen Türen oder Fenstern erforderlich, bei denen sich das Griffteil in der Mitte des betreffenden Tür- oder Fensterflügels befindet.

Von Vorteil ist es hierbei, wenn die über das Getriebemittel ausgebildete Kopplung zwischen dem zumindest einen in der Aufspannebene verfahrbaren Seitenanschlag und der Ablängeinrichtung dazu ausgebildet ist, eine Verfahrstrecke S des zumindest einen Seitenanschlags hälftig in einer Verfahrstrecke S/2 der Ablängeinrichtung zu übertragen.

Demgemäß ist vorgesehen, dass die Ablängeinrichtung zwar in die gleiche Richtung wie der Ablänganschlag, aber nur um die halbe Strecke verfahren wird. Der Abstand zwischen der Ablängeinrichtung und dem zugeordneten Ablänganschlag halbiert sich somit auf die Hälfte, sodass ein an beiden Endabschnitten abzulängendes Beschlagteil nacheinander mit beiden freien Enden durch die Ablängeinrichtung hindurch gegen den Ablänganschlags zwecks entsprechender Ablängung zu führen ist.

Nach einer Weiterbildung der Erfindung ist vorgesehen, das Getriebemittel und/oder die Kopplung zwischen der Ablängeinrichtung und dem zumindest einen Seitenanschlag variabel auszugestalten, derart dass die Kopplung jederzeit aktivierbar und deaktivierbar ist.

Demgemäß kann die erfindungsgemäße Vorrichtung in zumindest zwei unterschiedlichen Betriebsmodi betrieben werden. In einem ersten Betriebsmodus ist die Position der Ablängeinrichtung unterhalb der Aufspannebene fixiert und die Verfahrbewegung eines Seitenanschlags oder der Seitenanschläge wird direkt auf den Ablänganschlag übertragen.

Im anderen, zweiten Betriebsmodus, bei welchem die Ablängeinrichtung ebenfalls an den zumindest einen oder an sämtliche Seitenanschläge gekoppelt ist, wird diese parallel zum Ablänganschlag aber nur um die Hälfte dessen Verfahrstrecke verstellt, sodass das zwischen Ablänganschlag und Ablängeinrichtung gebildete Ablängmaß gegenüber der vorbeschriebenen ersten Konfiguration exakt halbiert ist.

Mittels einer derart konfigurierbaren Ablängvorrichtung können je nach Bedarf sowohl sogenannte Festanschläge als auch solche, die für Tür- und Fensterflügel mit mittiger Griffanordnung vorgesehen sind, je nach Bedarf und individuell an den in der Aufspannebene eingespannten Tür- oder Fensterflügel angepasst werden.

Nach einer Weiterbildung der Erfindung ist zudem vorgesehen, dass das zwischen dem zumindest einen Seitenanschlag und der Ablängeinrichtung vorgesehene Getriebemittel als Untersetzungsgetriebe ausgebildet ist, wobei ein- und ausgangsseitig des Getriebes jeweils kraftübertragende Zug- oder Druckmittel vorgesehen sind, von denen das eingangsseitige Zug-Druckmittel mit dem zumindest einen Seitenanschlag koppelbar ist und das ausgangsseitige Zug-Druckmittel zum Verschieben der Ablängeinrichtung entlang einer unterhalb der Aufspannebene verlaufenden Führung ausgebildet ist.

Der vom eingangsseitigen Zug-Druckmittel zur Verfügung gestellte Verstellweg wird über das Getriebe im Verhältnis 2 zu 1 auf das ausgangsseitige Zug-Druckmittel übertragen, sodass die Ablängeinrichtung letztlich nur um die Hälfte der Wegstrecke verstellt wird, um welche das eingangsseitige Zug-Druckmittel, bzw. die dem eingangsseitigen Zug-Druckmittel zugeordneten Seitenanschläge verstellt werden.

Weiterhin ist vorgesehen, dass das am Getriebe eingangsseitig vorgesehene Zug-Druckmittel über einen schaltbaren Pneumatikzylinder und über einen starr mit dem Seitenanschlag verbundenen Mitnehmer mit dem zumindest einen Seitenanschlag gekoppelt ist. In dem ersten Betriebsmodus, bei welchem die Ablängeinrichtung in ihrer Position fixiert ist, ermöglicht der Pneumatikzylinder eine frei bewegliche Führung des eingangsseitigen Zug-Druckmittels. Der Pneumatikzylinder ist hierbei über den Mitnehmer fest mit den Seitenanschlägen oder mit deren Schiene gekoppelt.

In dem anderen, für die beidseitige Ablängung der Beschlagteile vorgesehene Betriebsmodus hingegen verhindert der Pneumatikzylinder eine freie Beweglichkeit zwischen dem eingangsseitigen Zug-Druckmittel und der Verstellbewegung der Seitenanschläge. In diesem Betriebsmodus wird das Zug-Druckmittel entsprechend der Verstellbewegung der Seitenanschläge mitbewegt, sodass eine entsprechend um die Hälfte gekürzte Verstellbewegung an die ihrerseits an einer Führung gelagerte Ablängeinrichtung frei übertragen werden kann.

### Ausführungsbeispiele

Weitere Ziele, Merkmale sowie vorteilhafte Anwendungsmöglichkeiten der vorliegenden Erfindung ergeben sich aus der nachfolgenden Beschreibung von Ausführungsbeispielen anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen. Es zeigen:
- Figur 1: eine perspektivische Ansicht der erfindungsgemäßen Ablängvorrichtung,
- Figur 2: eine Vorderansicht der Ablängvorrichtung,
- Figur 3: eine weitere perspektivische Ansicht der Vorrichtung gemäß Figur 1,

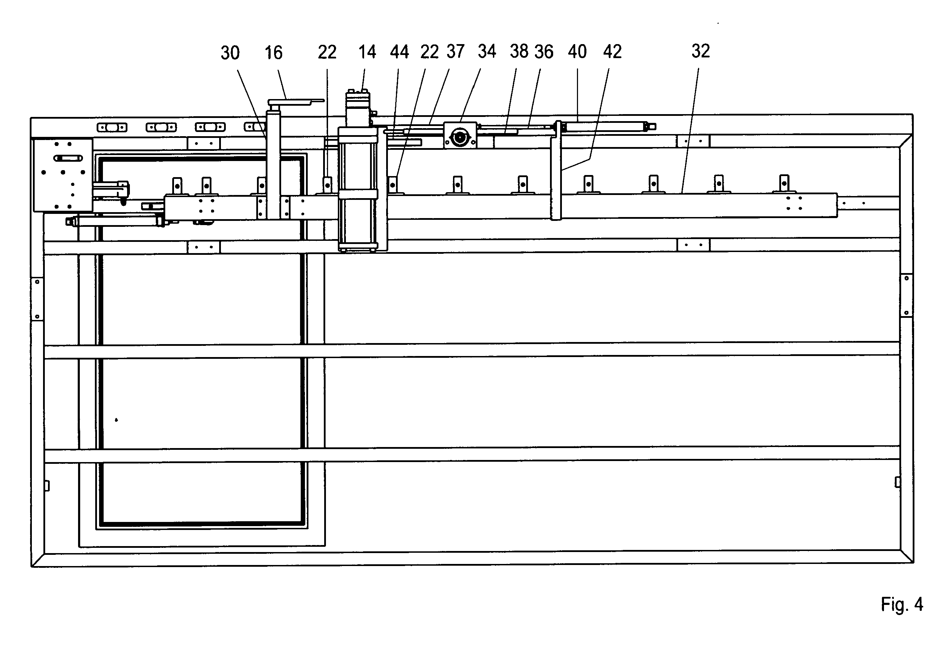

- Figur 4: eine Draufsicht auf die Vorrichtung gemäß der Figuren 1 bis 3 von unten und
- Figur 5: eine Querschnittsdarstellung durch die Vorrichtung.

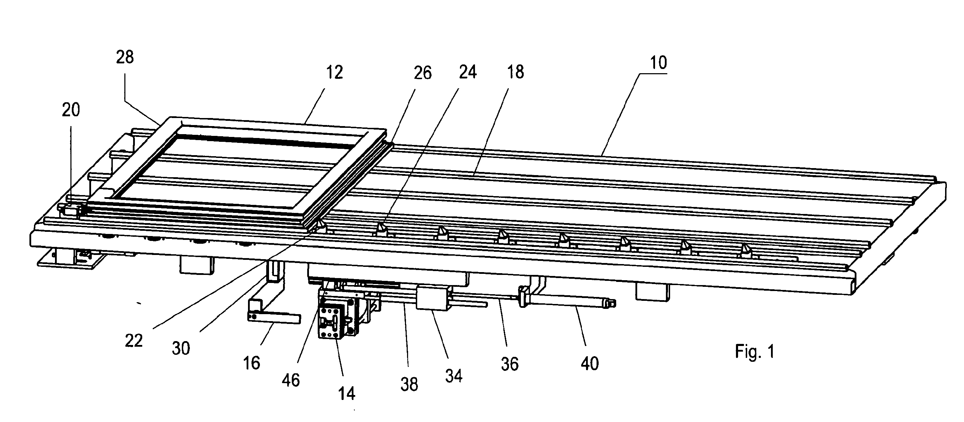

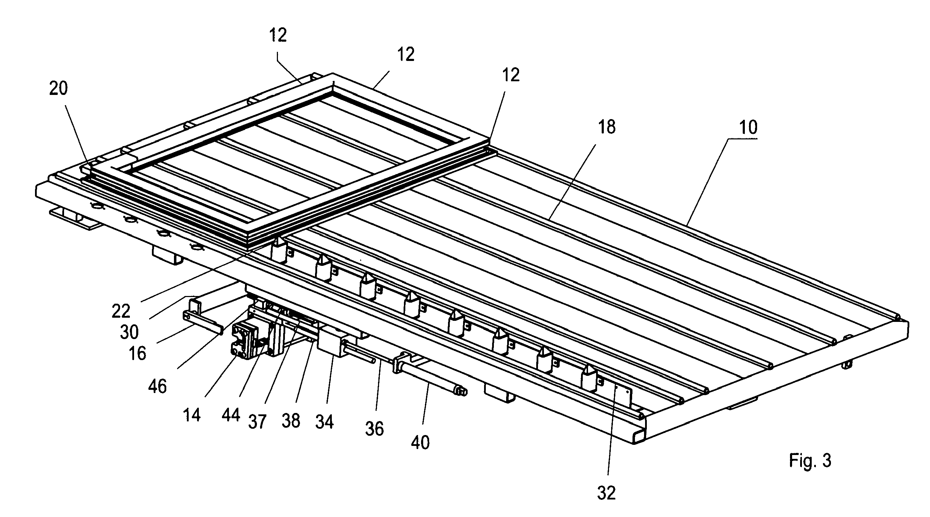

Die in den Figuren 1 und 3 perspektivisch in einer schematischen Ansicht gezeigte Ablängvorrichtung 10 weist eine Aufspannebene 18 zur Ablage bzw. Aufnahme eines Tür- oder Fensterflügels 12 auf. An dem in den Figuren links dargestellten Endabschnitt der Vorrichtung ist ein Endanschlag 20 vorgesehen, an welchem der Tür- oder Fensterflügel 12 mit einem Randabschnitt 28 in Anlagestellung bringbar ist.

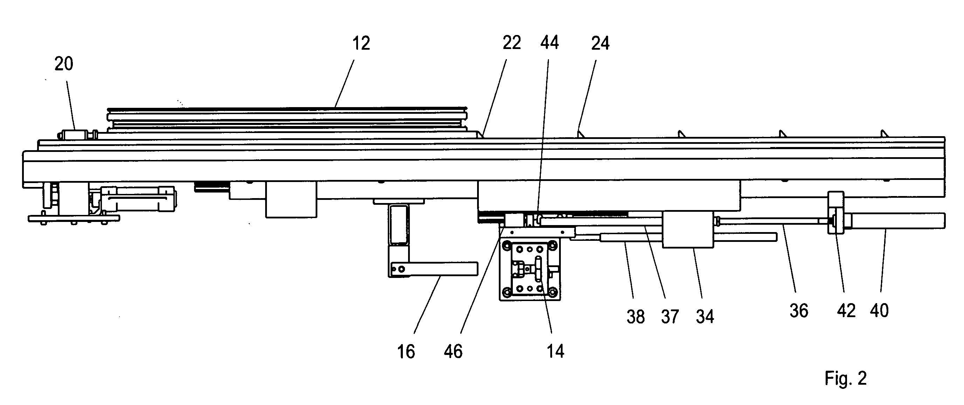

Eine solche Anlageposition ist in den Figuren 1 bis 3 durchgängig gezeigt. An den dem Randabschnitt 28 gegenüberliegenden Randabschnitt 26 des Flügels 12 ist ein verstellbarer Seitenanschlag 22 in Anlagestellung bringbar, wie in den Figuren 1 bis 3 gezeigt. Der Seitenanschlag 22 sowie weitere äquidistant hierzu an einer in Längsrichtung verstellbaren Schiene 32 angeordneten Anschläge 24 sind unmittelbar über einen Ausleger 30 mit einem Ablänganschlag 16 gekoppelt. Dieser Ablänganschlag 16 ist durch die Verstellbewegung der Seitenanschläge 22, 24 gegenüber der ihm zugeordneten Ablängeinrichtung 14, welche als Schere oder Stanze ausgebildet sein kann, verstellbar.

Der Ablänganschlag 16 sowie die als Stanze oder Schere ausgebildete Ablängeinrichtung 14 befinden sich in diesem Ausführungsbeispiel unterhalb der Aufspannebene 18. Eine Anordnung oberhalb oder in Höhe der Aufspannebene ist hierbei ebenfalls durchaus denkbar. Die Ablängeinrichtung 14 und der ihr zugeordnete Ablänganschlag 16 sind jedenfalls in einer Ebene parallel zur Aufspannebene 18 zueinander verstellbar. Der Verstellweg der Seitenanschläge 22, 24 wird dabei über die Schiene 32 und den Ausleger 30 unmittelbar und ohne Zwischenschaltung irgendwelcher Stell- oder Umlenkmittel auf den Ablänganschlag 16 übertragen.

An die entlang ihrer Längsrichtung verfahrbare Schiene 32 ist ein als Ausleger ausgebildeter Mitnehmer 42 angeordnet. Dieser ist fest mit einem Pneumatikzylinder 40 verbunden, der bei der Verstellbewegung der Schiene 32 oder der Seitenanschläge 22, 24 das mit einer Verzahnung 37 ausgebildete Zug-Druck-Gestänge 36 umschließt. In einer Freigabestellung, bei welcher die Ablängeinrichtung 14 bezüglich der Aufspannebene 18 fixiert ist, kann der im Pneumatikzylinder 40 frei geführte Endabschnitt des Zug-Druck-Gestänges 36 frei hin und her bewegt werden.

Bei einer Aktivierung des Pneumatikzylinders 40, bei welcher zugleich eine Fixierung 46 der Ablängeinrichtung 14 gelöst wird, bewirkt der Pneumatikzylinder 40 eine feste mechanische Kopplung zwischen dem Mitnehmer 42 und dem eingangsseitigen Zug-Druck-Gestänge 36. Das Getriebe, welches als Untersetzungsgetriebe im Verhältnis 2 zu 1 ausgebildet ist, übersetzt den Verstellweg S der Zug-Druck-Stange 36 auf einen Verstellweg S/2 des ausgangsseitigen Zug-Druck-Gestänges 38. Dieses Zug-Druck-Gestänge 38 ist fest mit der Stanze 14 verbunden, die ihrerseits an einer Führung 44 entlang gleitend um die Hälfte des Verstellwegs des Ablänganschlags 16 verschoben wird.

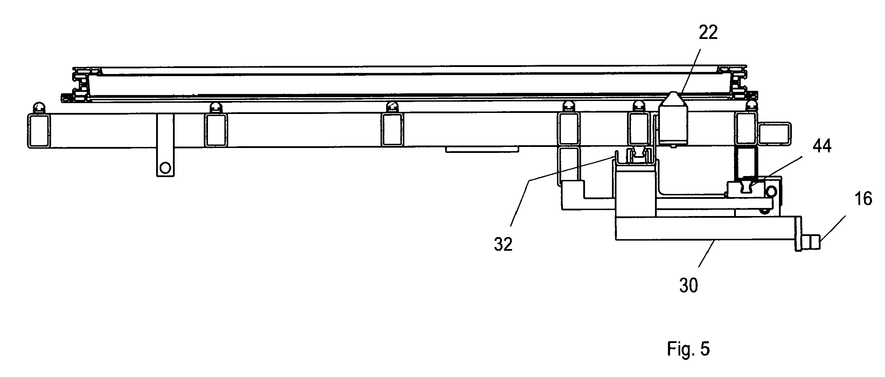

Aus der Querschnittsdarstellung gemäß Figur 5 ist deutlich die unmittelbare Kopplung des Seitenanschlags 22 mit der Schiene 32 und dem damit verbundenen Ausleger 30 und dem Ablänganschlag 16 zu erkennen. Davon unabhängig ist die Ablängeinrichtung 14 an einer weiteren Führungsschiene 44 verschiebbar geführt, wobei eine Festlegung bzw. mechanische Fixierung der Ablängeinrichtung 14 an der Führung mittels eines Klemmelements 46 erfolgt.

### Bezugszeichenliste

- 10: Ablängvorrichtung
- 12: Flügel
- 14: Ablängeinrichtung
- 16: Ablänganschlag
- 18: Aufspannebene
- 20: Endanschlag
- 22: Seitenanschlag
- 24: Seitenanschlag
- 26: Randabschnitt
- 28: Randabschnitt
- 30: Ausleger
- 32: Schiene
- 34: Getriebe
- 36: Zug-Druck-Gestänge
- 37: Zahnstange
- 38: Zug-Druck-Gestänge
- 40: Pneumatikzylinder
- 42: Mitnehmer
- 44: Führung
- 46: Klemmmittel

## Patentansprüche

1. Vorrichtung zum Ablängen eines für eine Tür- oder einen Fensterflügel (12) vorgesehenen Beschlagteils mit einer Ablängeinrichtung (14) und einem ihr zugeordneten Ablänganschlag (16) und mit einer Aufspannebene (18) für den Tür- oder Fensterflügel (12), in welcher ein Endanschlag (20) und zumindest ein Seitenanschlag (22, 24) vorgesehen sind, wobei der Abstand zwischen dem End- (20) und dem Seitenanschlag (22, 24) verstellbar ist, sodass zwischen dem End- (20) und dem Seitenanschlag (22, 24) ein Tür- oder Fensterflügel (12) mit gegenüberliegenden Randabschnitten (26, 28) in Anlagestellung bringbar ist und wobei mechanische Kopplungsmittel (30) vorgesehen sind, welche den Abstand zwischen dem Ablänganschlag (16) und der Ablängeinrichtung (14) mit dem zwischen End- (20) und Seitenanschlag (22, 24) einstellbaren Abstand koppeln, wobei der Ablänganschlag (16) und die Ablängeinrichtung (14) in einer Ebene parallel zur Aufspannebene (18) angeordnet sind.

2. Vorrichtung nach Anspruch 1, wobei der Ablänganschlag (16) mit dem zumindest einen Seitenanschlag (22, 24) gekoppelt und parallel zu dem Seitenanschlag (22, 24) verstellbar ausgebildet ist.

3. Vorrichtung nach einem der vorhergehenden Ansprüche, wobei eine Vielzahl von Seitenanschlägen (22, 24) in einem vorgegebenen Abstand zueinander angeordnet, miteinander mechanisch gekoppelt und gemeinsam in der Aufspannebene verstellbar sind.

4. Vorrichtung nach einem der vorhergehenden Ansprüche, wobei der Ablänganschlag (16) und der zumindest eine Seitenanschlag (22, 24) starr mit einer unterhalb der Aufspannebene angeordneten und parallel zur Aufspannebene verfahrbaren Schiene (32) starr verbunden sind.

5. Vorrichtung nach einem der vorhergehenden Ansprüche, wobei die Ablängeinrichtung (14) mit zumindest einem der Seitenanschläge (22, 24) mechanisch gekoppelt und parallel zur Aufspannebene verstellbar ist.

6. Vorrichtung nach einem der vorhergehenden Ansprüche, wobei die Ablängeinrichtung (14) über ein Getriebemittel (34) mit zumindest einem der Seitenanschläge (22, 24) gekoppelt ist.

7. Vorrichtung nach Anspruch 6, wobei die über das Getriebemittel (34) ausgebildete Kopplung zwischen dem zumindest einen Seitenanschlag (22, 24) und der Ablängeinrichtung (14) dazu ausgebildet ist, eine Verfahrstrecke S des zumindest einen Seitenanschlags (22, 24) in eine Verfahrstrecke S/2 der Ablängeinrichtung (14) zu übertragen.

8. Vorrichtung nach einem der Ansprüche 6 oder 7, wobei das Getriebemittel (34) und/oder die Kopplung zwischen Ablängeinrichtung (14) und dem zumindest einen Seitenanschlag (22, 24) zu- und abschaltbar ausgebildet ist.

9. Vorrichtung nach einem der vorhergehenden Ansprüche 6 bis 8, wobei ein-und ausgangsseitig des Getriebes (34) Zug-Druckmittel (36, 38) vorgesehen sind, von denen das eingangsseitige Zug-Druckmittel (36) mit dem zumindest einen Seitenanschlag (22, 24) koppelbar ist und das ausgangsseitige Zug- Druckmittel (38) zum Verschieben der Ablängeinrichtung (14) entlang einer unterhalb der Aufspannebene (18) verlaufenden Führung (44) ausgebildet ist.

10. Vorrichtung nach Anspruch 9, wobei das eingangsseitige Zug-Druckmittel (36) über einen schaltbaren Pneumatikzylinder (40) und über einen starr mit dem Seitenanschlag (22, 24) verbundenen Mitnehmer (42) mit dem zumindest einen Seitenanschlag (22, 24) gekoppelt ist.
